Europäisches Patentamt

European Patent Office

Office européen des brevets

(11) Veröffentlichungsnummer: **0 332 807**
**A2**

## (12) EUROPÄISCHE PATENTANMELDUNG

(21) Anmeldenummer: 89100746.0

(51) Int. Cl.⁴: **G01B 5/00**

(22) Anmeldetag: 18.01.89

(30) Priorität: 15.03.88 DE 3808548

(43) Veröffentlichungstag der Anmeldung:
20.09.89 Patentblatt 89/38

(84) Benannte Vertragsstaaten:
DE FR GB IT

(71) Anmelder: Rheinmetall GmbH
Ulmenstrasse 125 Postfach 6609
D-4000 Düsseldorf(DE)

(72) Erfinder: Knäbel, Horst
Friedenstrasse 10
D-4005 Meerbusch 1(DE)

(54) Messvorrichtung zur Lagebestimmung von Werkstück-Flächen.

(57) Bisher bekannte Meßvorrichtungen zur Lagebestimmung von Kanten, Absätzen und dergleichen von Werkstücken, beispielsweise Wellen, tasten nur solche Flächen an, die senkrecht zu einem Längenmeßtaster orientiert sind. Die Anzahl gleichzeitig erfaßbarer Meßstellen ist aus Platzgründen oft gering.

Erfindungsgemäß wird zur Erzielung einer großen Meßstellendichte eine Meßvorrichtung (10) vorgeschlagen, die einen Grundkörper (14) mit einem darin befestigten Längenmeßtaster (16) mit einem damit mittels Blattfeder (30) verbundenen Tastkopf (28) mit einer Kugelspitze (34) aufweist. Zum Messen wird die Kugelspitze (34) durch Betätigung eines Tastkolbens (24) über eine Abstützfläche (36) im Grundkörper (14) an eine zu kontrollierende Werkstück-Fläche (40) herangeführt.

Die erfindungsgemäße Meßvorrichtung (10) kann im Verbund mit anderen Meßvorrichtungen, bzw. Meßtastern in einem Meßsystem verwendet werden, wobei die Meßvorrichtung (10) parallel zu der zu kontrollierenden Fläche (40) angeordnet ist.

FIG.2

### Meßvorrichtung zur Lagebestimmung von Werkstück-Flächen

Die Erfindung bezieht sich auf eine Meßvorrichtung zur Lagebestimmung von Werkstück-Flächen, insbesondere an Kanten, Absätzen und dergleichen dieser Werdstücke, mit den Merkmalen des Oberbegriffs des Patentanspruchs 1.

Bei den meisten bekannten, gattungsgemäßen Meßvorrichtungen zur Kontrolle der Lage von Werkstück-Flächen werden von einem anstellbaren Tastkopf eines Längenmeßtasters nur solche Werkstück-Flächen direkt abgetastet, die senkrecht zum Meßtaster, bzw. zu dessen Längsachse orientiert sind.

Werden nun eine Vielzahl solcher Meßvorrichtungen zu einem Meßsystem verbunden, zur Kontrolle von Wellen beispielsweise, so werden häufig die an solchen Wellen, insbesondere an Kanten, Absätzen und Ausnehmungen, auftretenden Flächen durch dazu zugeordnete Meßtaster kontrolliert, die sich untereinander durch unterschiedliche Ausrichtung behindern. Damit wird aber nur eine geringe Meßstellen-Dichte erreicht. Hilfsweise werden die Meßtaster oft mit komplizierten Hilfseinrichtungen, wie beispielsweise extrem geköpften Tastspitzen, die auf die einzelnen Meßtaster montiert werden, versehen, oder die einzelnen Meßtaster werden in verschiedenen Meßebenen um die zu vermessende Welle herum angeordnet. Bei beiden erwähnten Möglichkeiten ist jedoch nachteilig, daß entweder die Anzahl der gleichzeitig erfaßbaren Meßstellen gering und damit unbefriedigend oder das im anderen Fall der Aufwand der Vorrichtung in Verbindung mit der erforderlichen Justierung sehr groß ist, wenn beispielsweise Absatz- und Längenmaße einer Welle kontrolliert werden sollen.

Der Erfindung liegt daher die Aufgabe zugrunde, eine Meßvorrichtung zur Lagebestimmung von Werkstück-Flächen, insbesondere an Kanten, Absätzen, Ausnehmungen und dergleichen zu schaffen, die sich durch geringen Aufwand auszeichnet und die in Verbindung mit ansich bekannten Meßtastern, im wesentlichen in gleicher Ausrichtung wie diese, eine große Meßstellen-Dichte, insbesondere bei der Kontrolle von Teil- bzw. Gesamtlängen von Werkstücken ermöglicht.

Diese Aufgabe wird gelöst durch eine erfindungsgemäße Meßvorrichtung mit den Merkmalen im kennzeichnenden Teil des Patentanspruchs 1.

Vorteilhafte Ausgestaltungen und Weiterbildungen der Erfindung gehen aus den Unteransprüchen hervor. Der besondere Vorteil der erfindungsgemäßen Meßvorrichtung besteht darin, daß der Längenmeßtaster parallel zu der zu kontrollierenden Werkstück-Fläche angeordnet werden kann, da er mit einem Tastkopf versehen ist, dessen kugelförmige Tastspitze über eine Blattfeder auslenkbar ist, die parallel zu der zu kontrollierenden Werkstück-Fläche verläuft. Eine entsprechende Vorschub-Bewegung des Tastkopfes, bzw. der Kugelspitze wird über eine in der erfindungsgemäßen Meßvorrichtung vorgesehene Abstützfläche in eine zu einer Längsachse der Meßvorrichtung radial orientierte Bewegung überführt, die zum Anlegen der Kugelspitze an die zu kontrollierende Werkstück-Fläche führt.

Da die erfindungsgemäße Meßvorrichtung in ihren Abmessungen sehr kleinbauend ausgeführt werden kann, ermöglicht dies in vorteilhafter Weise, beispielsweise bei der Vermessung einer mehrfach abgesetzten Welle, eine Vielzahl von Absatzlängen gleichzeitig zu messen. Dies ist sogar unabhängig von der Abstufungsrichtung möglich, da ein erfindungsgemäßer Grundkörper der Meßvorrichtung so ausgebildet und in einem Meßsystem orientiert werden kann, daß bei Anstellung der Kugelspitze diese von den entsprechend geneigten Abstützflächen nach links oder rechts gedrängt wird und somit eine links oder rechts vom Längenmeßtaster befindliche zu kontrollierende Fläche abgetastet werden kann.

Ein weiterer Vorteil der erfindungsgemäßen Meßvorrichtung besteht darin, daß sie beispielsweise bei der Kontrolle von Einstich-Maßen für Sicherungsringe mit einer austauschbaren Zusatzeinrichtung versehen werden kann, die über einen rechtwinklig zur Längsachse der Meßvorrichtung bewegbaren Taststift verfügt, der von der Kugelspitze des Meßtasters auf die zu kontrollierende Fläche gedrückt wird.

Besonders vorteilhaft gestaltet sich ein solcher Aufbau der erfindungemäßen Meßvorrichtung, wenn ein Längenmeßtaster mit integrierter Anstell-Vorrichtung verwendet wird. Bei einem solchen Meßtaster kann der Tastkolben beispielsweise pneumatisch ausgefahren und über Federkraft rückgestellt werden. Andererseits sind zur Verwendung in einer erfindungsgemäßen Meßvorrichtung auch doppelt wirkende Tastkolben oder eine Rückstellung durch Unterdruck denkbar.

Im folgenden wird die Erfindung unter Zuhilfenahme einer Zeichnung ausführlich erläutert und beschrieben und es wird auf weitere Vorteile der Erfindung eingegangen.

Es zeigen:

Figur 1: eine Schnittdarstellung einer erfindungsgemäßen Meßvorrichtung in Ausgangsposition;

Figur 2: eine teilweise aufgebrochene Ansicht von oben auf eine Meßvorrichtung gemäß Figur 1 in Meßposition;

Figur 3: eine Draufsicht auf eine Meßvorrichtung gemäß Figur 2 mit einer Zusatzeinrichtung zur Abtastung mittels Taststift.

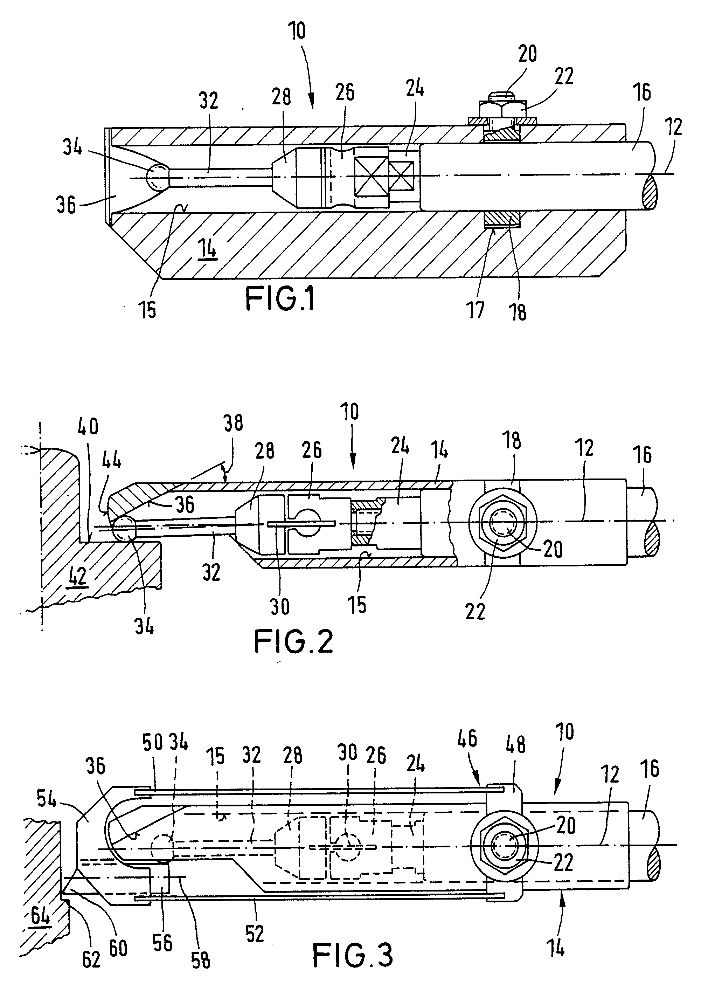

In den Figuren 1 und 2 ist eine erfindungsgemäße Meßvorrichtung 10 dargestellt mit ihrem Grundkörper 14 und einer Längsachse 12. Die Längsachse 12 ist die Mittellinie einer im Grundkörper 14 angebrachten Längsbohrung 15, in der ein Längenmeßtaster 16 lösbar befestigt ist. Im Bereich des Längenmeßtasters 16 ist der Grundkörper 14 mit einer schlitzförmigen Ausnehmung 17 versehen, in die ein Klemmstück 18 eingesetzt ist, das den Längenmeßtaster 16 umgreift, so daß der Längenmeßtaster 16 durch Anziehen einer Mutter 22 auf einem mit dem Klemmstück 18 verbundenen Gewindebolzen 20 im Grundkörper 14 eingespannt wird.

Ein Tastkolben 24 des Längenmeßtasters 16 kann durch ein geeignetes Druckmittel, vorzugsweise pneumatisch oder hydraulisch, längsverschieblich entlang der Längsachse 12 betätigt werden. Am Tastkolben 24 ist ien Kupplungsteil 26 angebracht, vorzugsweise in den Tastkolben 24 eingeschraubt. Das Kupplungsteil 26 ist mit einem Tastkopf 28 mittels einer Blattfeder 30 verbunden, wobei die Blattfeder 30 in Richtung der Längsachse 12 und beim eigentlichen Meßvorgang parallel zu einer zu kontrollierenden Fläche 40 eines ersten Werkstücks 42 angeordnet ist. Aus Figur 2 wird deutlich, daß die Blattfeder 30 eine geringe Auslenk-Bewegung des Tastkopfes 28 gegenüber dem Kupplungsteil 26 bezogen auf die Längsachse 12 zuläßt.

Am Tastkopf 28 ist ein Stab 32 angebracht, an dem eine Kugelspitze 34 vorgesehen ist. Durch Betätigen der Anstellung des Längenmeßtasters 16, beispielsweise durch Druckluftbeaufschlagung des Tastkolbens 24, wird der Tastkopf 28 und damit die Kugelspitze 34 entlang der Längsachse 12 in Richtung auf eine im vorderen Teil des Grundkör pers 14 angebrachte Abstützfläche 36 verschoben. Die ins Innere des Grundkörpers 14 ragende Abstützfläche 36 ist gegenüber der Längsachse 12 der Vorrichtung 10 geneigt angeordnet und bildet mit der Längsachse 12 einen Winkel 38. Vorzugsweise wird ein Winkel 38 von 26° 33′ und 54″ verwendet, da der Tangens eines solchen Winkels gleich 0,5 ist und daher beispielsweise eine radiale Auslenkung der Kugelspitze 34 gegenüber der Längsachse 12 um 1μm einer Änderung des Meßweges des Längenmeßtasters 16, bzw. des Tastkolbens 24 von 2 μm entspricht. Beim Meßvorgang bildet die Abstützfläche 36 zusammen mit der zu kontrollierenden Werkstück-Fläche 40 des ersten Werkstücks 42 eine Art keilförmige Ausnehmung, in die die Kugelspitze 34 auf dem Stab 32 des Tastkopfes 28 gedrängt wird, bis sie zur beidseitigen Anlage kommt.

Der Grundkörper 14 weist eine zum ersten Werkstück 42 gerichtete vordere Stirnfläche 44 auf, die als Stütz- oder Prismenschenkelfläche, vorzugsweise von balliger Kontur, ausgebildet ist, so daß, falls erforderlich, das zu kontrollierende erste Werkstück 42 auf ihr abgestützt oder gelagert werden kann.

Die in Figur 3 dargestellte Meßvorrichtung 10 ist mit einer Zusatzvorrichtung 46 versehen, die es ermöglicht, extrem schmale Werkstück-Flächen zu kontrollieren. Diese Zusatzvorrichtung 46 umfaßt ein Ersatzklemmstück 48, einen ersten Blattfederschenkel 50 und einen zweiten Blattfederschenkel 52 sowie ein Joch 54 und einen darin befestigten Taststift 56.

Das Ersatzklemmstück 48 wird bei Verwendung der Zusatzvorrichtung 46 gegen das in den Figuren 1 und 2 dargestellte Klemmstück 18 ausgetauscht und dient gleichermaßen durch Anziehen der Mutter 22 auf dem Gewindebolzen 20 der Befestigung des Längenmeßtasters 16 im Grundkörper 14 der Meßvorrichtung 10.

Der erste Blattfederschenkel 50 und der zweite Blattfederschenkel 52 sind jeweils endseitig fest mit dem Ersatzklemmstück 48, bzw. dem Joch 54 verbunden, wobei die Blattfederschenkel 50, 52 parallel zueinander und parallel zur Blattfeder 30 und damit parallel zu einer zu kontrollierenden Fläche 62 eines zweiten Werkstückes 64 angeordnet sind. Die beiden Blattfederschenkel 50, 52 bilden mit dem Ersatzklemmstück 48 und dem Joch 54 ein Parallelogramm.

Im Joch 54 ist die Tastspitze 56 fest angebracht, sie weist mit einer Tastkante 60 zu der zu kontrollierenden Werkstück-Fläche 62.

Zum Messen wird der Tastkolben 24 des Längenmeßtasters 16 durch ein geeignetes Druckmittel vorwärtsbewegt, so daß die Kugelspitze 34 auf dem Stab 32 des Tastkopfes 28 gegen die Abstützfläche 36 gedrückt wird. Dieser Vorgang entspricht dem vorher schon beschriebenen. Die Kugelspitze 34 drückt auf die Abstützfläche 36 und wirkt gleichzeitig auf den im Joch 54 angebrachten Taststift 56, der vorzugsweise zur Erzielung einer genau definierten Kontaktzone zur Kugelspitze 34 hin abgeplattet ist. Die auf den Taststift 56 wirkende Kugelspitze 34 lenkt das Joch 54 geringfügig aus, so daß die Tastkante 60 des Taststiftes 56 gegen die zu kontrollierende Werkstück-Fläche 62 des zweiten Werkstücks 64 geführt wird. Aufgrund der Parallelogramm-Form der Zusatzvorrichtung 46 liegt bei Anlage der Tastkante 60 an die zu kontrollierende Fläche 62 eine Längsachse 58 des Taststiftes 56 parallel zur Längsachse 12 der Vorrichtung 10.

Nach Druckentlastung wird der Tastkolben 24 durch eine geeignete Maßnahme, beispielsweise durch Unterdruck oder durch Federkraft, in seine Ausgangsposition zurückgebracht.

Der besondere Vorteil der erfindungsgemäßen Meßvorrichtung 10 ist darin zu sehen, daß die Kugelspitze 34 ausschließlich punktförmigen Belastungen an der Abstützfläche 36 und an der zu kontrollierenden Werkstück-Fläche 40, bzw. am Taststift 56 ausgesetzt ist, so daß die geforderte hohe Meßgenauigkeit nicht beeinträchtigt wird.

Die erfindungsgemäß als Stütz- oder Prismenschenkelfläche konzipierte vordere Stirnfläche 44 des Grundkörpers 14 ist darüberhinaus in vorteilhafter Weise verwendbar, wenn die Länge eines Wellenabsatzes gemessen werden soll und die Welle selbst auf ihrem verjüngten Abschnitt abgestützt oder gehalten werden kann, bzw. soll. Auf einfache Weise können zwei erfindungsgemäße Meßvorrichtungen derart angeordnet werden, daß ihre vorderen Stirnflächen ein Prisma bilden auf dem die zu kontrollierende Welle exakt gelagert wird.

10 Vorrichtung
12 Längsachse von (10)
14 Grundkörper
15 Längsbohrung von (14)
16 Längenmeßtaster
17 ringförmige Ausnehmung von (14)
18 Klemmstück
20 Gewindebolzen
22 Mutter
24 Tastkolben
26 Kupplungsteil
28 Tastkopf
30 Blattfeder
32 Stab
34 Kugelspitze
36 Abstützfläche
38 Winkel zwischen (36) und (12)
40 Fläche von (42)
42 erstes Werkstück
44 vordere Stirnfläche von (14)
46 Zusatzvorrichtung
48 Ersatzklemmstück
50 erster Blattfederschenkel
52 zweiter Blattfederschenkel
54 Joch
56 Taststift
58 Längsachse von (56)
60 Tastkante
62 Fläche von (64)
64 zweites Werkstück

## Ansprüche

1. Meßvorrichtung zur Lagebestimmung von Werkstück-Flächen, insbesondere an Kanten, Absätzen und dergleichen dieser Werkstücke, mit einem an die zu prüfende Werkstück-Fläche znstellbaren Tastkopf eines Längenmeßtasters, **gekennzeichnet durch** folgende Merkmale:

a) die Vorrichtung (10) mit einer Längsachse (12) weist einen Grundkörper (14) mit einer darin angeordneten Längsbohrung (15) auf zur Aufnahme des Längenmeßtasters (16), der durch ein Klemmstück (18) im Grundkörper (14) lösbar befestigt ist;

b) der Längenmeßtaster (16) umfaßt einen zur Anstellung betätigbaren Tastkolben (24) und ein daran befestigtes Kupplungsteil (26) sowie einen damit durch eine Blattfeder (30) verbundenen Tastkopf (28), an dem ein Stab (32) mit einer Kugelspitze (34) angebracht ist, wobei die Blattfeder (30) parallel zu einer zu kontrollierenden Werkstück-Fläche (40, 62) angeordnet ist;

c) in einem vorderen, dem zu kontrollierenden Werkstück (42, 64) zugewandten Bereich des Grundkörpers (14) ist eine Abstützfläche (36) vorgesehen, die unter einem Winkel (38) zur Längsachse (12) der Vorrichtung (10) angelenkt ist, so daß der Kugelspitze (34) auf dem mit dem Tastkopf (28) verbundenen Stab (32) bei Anstellung des Längenmeßtasters (16) von der Abstützfläche (36) eine radial zur Längsachse (12) gerichtete Auslenkung aufgeprägt wird.

2. Vorrichtung nach Anspruch 1, **dadurch gekennzeichnet,** daß der Grundkörper (14) der Vorrichtung (10) eine zu kontrollierten Werkstück (42, 64) gerichtete vordere Stirnfläche (44) aufweist, die als Stütz- oder Prismenfläche nutzbar ist.

3. Vorrichtung nach einem der Ansprüche 1 bis 2, **dadurch gekennzeichnet,** daß die Vorrichtung (10) mit einer Zusatzvorrichtung (46) verbindbar ist, die ein Ersatzklemmstück (48) und ein Joch (54) umfaßt, wobei das Ersatzklemmstück (48) und das Joch (54) durch einen ersten Blattfederschenkel (50) und einen zweiten Blattfederschenkel (52), die beide parallel zur Blattfeder (30) angeordnet sind, verbunden sind.

4. Meßvorrichtung nach Anspruch 3, **dadurch gekennzeichnet,** daß die Zusatzvorrichtung (46) einen parallel zur Blattfeder (30) angeordneten Taststift (56) enthält, der im Joch (54) der Zusatzvorrichtung (46) befestigt und der der Kugelspitze (34) zur Antastung der zu kontrollierenden Werkstück-Fläche (62) formschlüssig vorgelagert ist, so daß der Taststift (56) mit seiner Tastkante (60) an die zu kontrollierende Werkstück-Fläche (62) durch eine rechtwinklig zur Längsachse (12) geführte Bewegung anstellbar ist.

FIG.1

FIG.2

FIG.3